# EUROPÄISCHE PATENTANMELDUNG

(11) **EP 2 823 738 A1**
(43) Veröffentlichungstag der Anmeldung: **14.01.2015**
(21) Anmeldenummer: 14002389.6
(22) Anmeldetag: 11.07.2014
(51) Int. Cl.: A47J 43/00, B01B 1/00, B01F 1/00, A47J 27/14

(54) **Kessel zum Kochen und/oder Braten von Speisen**

(30) Priorität: 11.07.2013 DE 202013103077 U
(71) Anmelder: Schwarte, Berthold, 48346 Ostbevern (DE)
(72) Erfinder: Schwarte, Berthold, 48346 Ostbevern (DE)
(74) Vertreter: Flötotto, Hubert

(57) **Zusammenfassung**

Die Erfindung betrifft einen Kessel (1) zum Kochen und/oder Braten von Speisen, umfassend ein Kesselgehäuse (2) in dem ein Rührwerk angeordnet ist, wobei das Kesselgehäuse (2) im wesentlichen zylinderförmig ausgebildet ist und an den Stirnseiten (3, 4) eine in einem Gestell (5) exzentrisch angeordnete Lagerachse (6) zum Kippen des Kesselgehäuses (2) vorgesehen ist, und wobei an der Außenwand (7) des Kesselgehäuses (2) eine aus Rohren (8) bestehende Heizeinrichtung angeordnet ist, deren Einspeisung mit Heizmedium über die Lagerachse (6) zum Kippen erfolgt. Erfindungsgemäß besteht dabei die Heizeinrichtung aus unabhängig voneinander regelbaren Heizkreisläufen (9, 10) zur besseren Regelung des Garprozess.

## Beschreibung

### Technisches Umfeld

Die Erfindung betrifft einen Kessel zum Kochen und / oder Braten von Speisen umfassend ein Kesselgehäuse, in dem ein Rührwerk angeordnet ist, wobei das Kesselgehäuse im Wesentlichen zylinderförmig ausgebildet ist und an den Stirnseiten eine in einem Gestell exzentrisch angeordnete Lagerachse zum Kippen des Kesselgehäuses vorgesehen ist und wobei an der Außenwand des Kesselgehäuses eine aus Rohren bestehende Heizeinrichtung angeordnet ist, deren Einspeisung mit einem Heizmedium über die Lagerachse zum Kippen erfolgt.

### Stand der Technik

Aus dem Stand der Technik sind Kippkochkessel insoweit bekannt, dass darin Speisen geschmort, gemischt, gekocht und gekühlt werden können. Ein horizontales Rührwerk hält dabei stückige Produkte gleichmäßig in der Schwebe, wobei Abstreifer am Rührwerk das Anbacken an den Kesselwandungen verhindern. Die Kesselbeheizung erfolgt indirekt mit Hochdruckdampf bis zu 10 bar über Wärmeträger oder Wärmeträgeröl. Das große Volumen der Beheizungskanäle bewirkt, dass stetig ein hoher Energievorrat vorhanden ist. Optional kann auch eine direkte Dampfheizung installiert werden. Alle Aggregate, Installationen und Dichtungen sind in den Standfüßen untergebracht und von außen leicht erreichbar. Die Energieversorgung des Kessels erfolgt durch eine fest installierte Leitung, die durch die Dreharme geführt werden und daher unfallsicher sind.

Mit einem derartigen Kessel können in Großküchenbetrieben große Mengen an Speisen zubereitet werden. Bei diesem nach dem Stand der Technik bekannten Kessel zum Kochen oder Braten stellt insbesondere die Beheizung der Speisen in dem Kessel ein gewisses Problem dar, da insbesondere der Wärmebedarf nicht dort in Wirkung gebracht werden kann, wo insbesondere in dem Kessel die Wärme gebraucht wird. So kann es vorkommen, dass aufgrund einer falschen Beheizung es zu Anbackungen an der Innenbehälterwand von Speisen kommen kann, da hier eine Überhitzung erfolgt ist.

### Aufgabe

Der Erfindung stellt sich somit das Problem einen Kessel zum Kochen und / oder Braten der gattungsgemäßen Art derart weiterzubilden, bei dem insbesondere die Zufuhr der für den Garprozess erforderlichen Wärme wesentlich besser regel- und einstellbar ist.

### Lösung

Erfindungsgemäß wird das Problem mit den Merkmalen des Anspruchs 1 gelöst, vorteilhafte Ausgestaltungen der Erfindung ergeben sich aus den nachfolgenden Unteransprüchen.

Die mit der Erfindung erreichten Vorteile bestehen nun darin, dass mit der erfindungsgemäßen Heizeinrichtung wahlweise die Wärme der zu garenden Speise in dem Kessel zugeführt werden kann. Somit wird erreicht, dass insbesondere im oberen Wandungsbereich die Wärme zurückgefahren werden kann oder sie kann hier stärker ausgebildet sein als im Bodenbereich, was durch die erfindungsgemäße Heizeinrichtung vorgenommen werden kann.

Gemäß der Erfindung wird hierzu vorgeschlagen, dass die Heizeinrichtung aus unabhängig voneinander regelbaren Heizkreisläufen besteht. Die Heizeinrichtung als solches besteht aus zwei getrennten Heizkreisläufen, wobei ein Heizkreislauf die gegenüberliegenden Wandbereiche des Kessels umfasst und wobei ein anderer Heizkreislauft den Bodenbereich des Kessels abdeckt. Somit können die in dem Kesselraum zu garenden Waren oder Speisen einmal vom Boden her beheizt werden oder aber man hält die Speisen nach einem Garprozess über den Wandbereich in einem Wärmestatus.

Nach einer besonders vorteilhaften Ausgestaltung der Erfindung verfügt jeder Heizkreislauf über eine gesonderte regelbare Dampfeinspeisung. Die Dampfeinspeisung sowie die Kondensatableitung der beiden unabhängigen Kreisläufe erfolgen hierbei an den Lagerachsnaben zum Kippen. Hierbei bestehen die Lagerachsnaben aus doppelwandigen Rohren, wobei ein Heizkreislauf mit dem Innenrohr verbunden ist, und der andere Heizkreislauf mit dem umgebenden Außenrohr. Hierbei ist der Heizkreislauf der Wandbereiche mit dem Außenrohr verbunden, wobei der Heizkreislauf des Bodenbereiches mit dem Innenrohr verbunden ist.

Nach einer besonders vorteilhaften Ausgestaltung des Wärmebereichs nehmen die Heizkreisläufe der Wandbereiche je einen Winkelbereich von 45° ein, die hier gegenüberliegend angeordnet sind. Der Heizkreislauf des Bodenbereiches erstreckt sich über einen Winkelbereich von 145°, so dass insbesondere eine hinreichende Erwärmung von unten her im Kessel gegeben ist. Nach einer vorteilhaften Ausgestaltung der Erfindung weisen die Heizkreisläufe der Wandbereiche sowie der Heizkreislauf des Bodenbereichs eine gemeinsame Rohrverbindung zur Entleerung auf.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Darstellung eines Kessels in einem Gestell;
- Figur 2: eine isolierte Darstellung des Kessels in perspektivischer Darstellung in einer ersten Ansicht;
- Figur 3: eine weitere perspektivische Darstellung des Kessels insbesondere in der Unteransicht;
- Figur 4: eine geschnittene Ansicht des Kessels in Stirnansicht;
- Figur 5: eine Stirnansicht des Kessels auf der Wärmezufuhrseite;
- Figur 6: eine weitere Stirnansicht des Kessels auf der Kondensatseite;
- Figur 7: eine geschnittene Ansicht des Kessels gemäß der Schnittlinie 7 in Figur 3;
- Figur 8: eine Detailansicht einer Lagerachsennabe auf der Wärmezufuhrseite und
- Figur 9: eine weitere Detailansicht der Lagerachsennabe auf der Kondensatseite.

### Ausführungsbeispiele

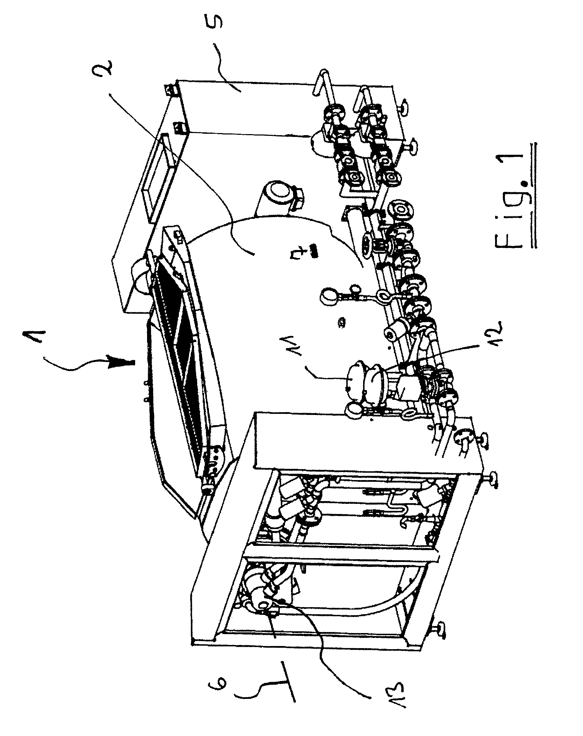

Die Figur 1 zeigt in der perspektivischen Darstellung einen Kessel 1 zum Kochen und / oder Braten zum Speisen, welcher im Wesentlichen ein Kesselgehäuse 2 umfasst, in dem ein nicht näher dargestelltes Rührwerk angeordnet ist. Das Kesselgehäuse 2 ist hierbei im Wesentlichen zylinderförmig ausgebildet, wobei an den Stirnseiten 3 und 4 eine in einem Gestell 5 exzentrisch angeordnete Lagerachse 6 zum Kippen des Kesselgehäuses 2 vorgesehen ist.

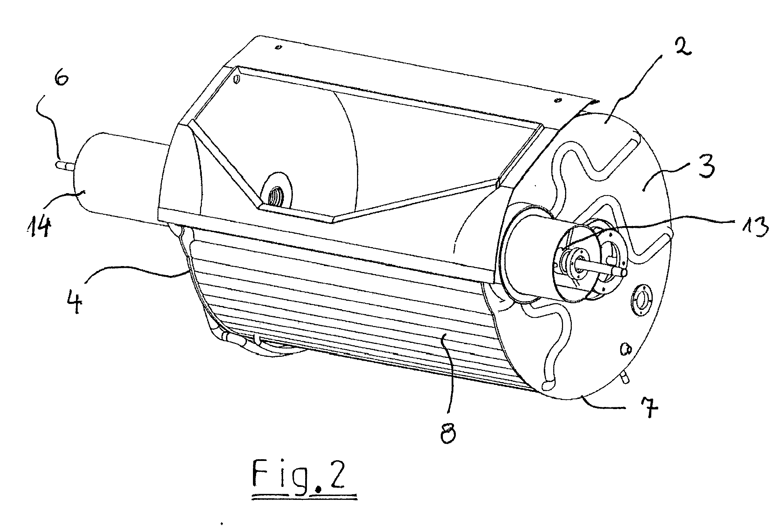

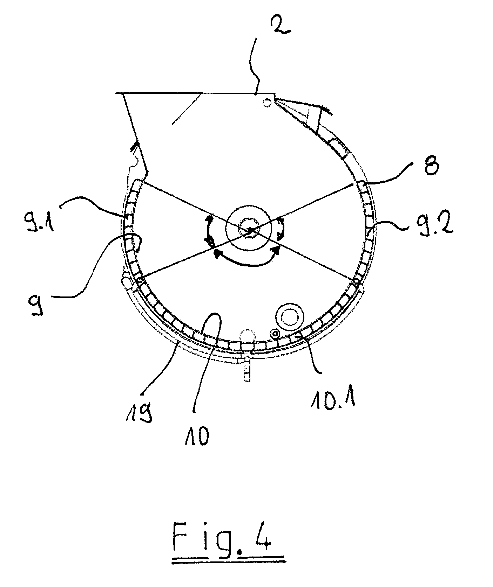

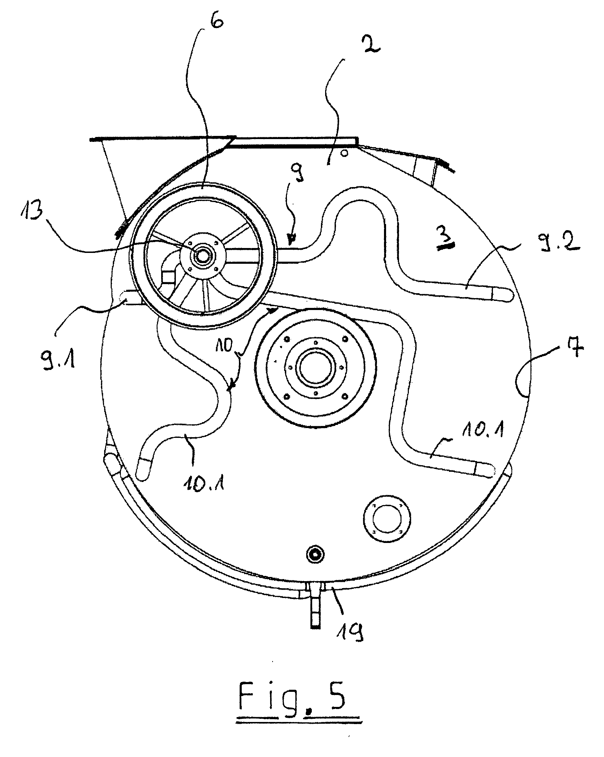

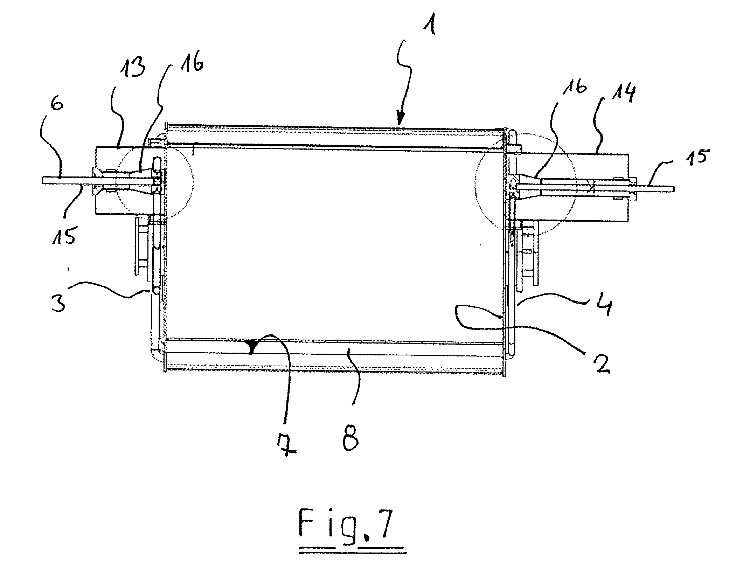

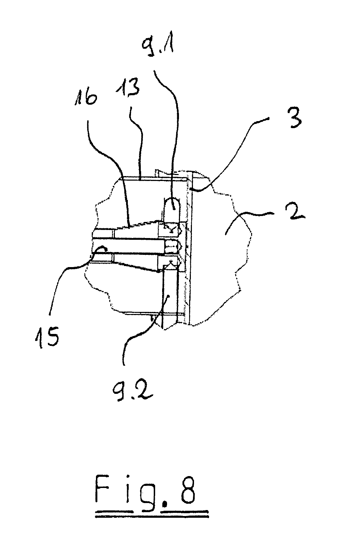

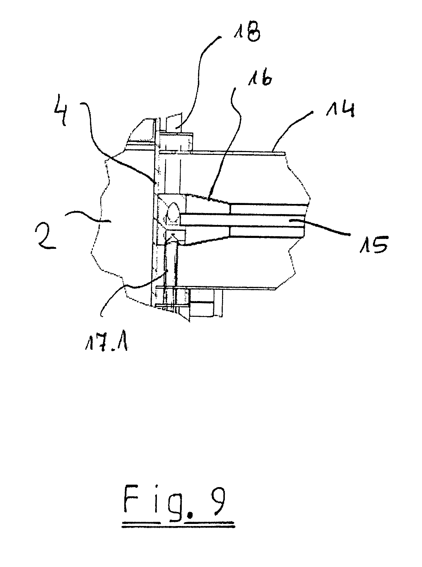

Wie insbesondere aus den Figuren 2, 3 und 4 zu erkennen ist, sind an der Außenwand 7 des Kesselgehäuses 2 eine aus Rohren 8 bestehende Heizeinrichtung angeordnet, deren Einspeisung mit einem Heizmedium über die Lagerachse 6 zum Kippen erfolgt. Gemäß der Erfindung besteht hierbei die Heizeinrichtung aus unabhängig voneinander regelbaren Heizkreisläufen 9 und 10, die voneinander getrennten sind. Dabei umfasst der Heizkreislauf 9 die gegenüberliegenden Wandbereiche 9.1 und 9.2 des Kessels 1, wobei der anderer Heizkreislauf 10 den Bodenbereich 10.1 des Kessels 1 umfasst. Dies ist insbesondere am besten zu erkennen in der Figur 4 in der geschnittenen Ansicht, wo die Wandbereiche 9. 1 und 9.2 zu erkennen sind, sowie der Bodenbereich 10.1, die jeweils von getrennten Heizkreisläufen durchströmt werden. Dabei verfügt jeder Heizkreislauf 9 und 10 über eine gesondert regelbare Dampfeinspeisung, wie diese insbesondere in der Figur 1 an der Rückseite des Gestells 5 zu erkennen ist. Hierzu sind zwei Druckventile 11 und 12 vorhanden, sowie entsprechend die dafür vorgesehenen Leitungen, die hier auf die Lagerachse 6 gerichtet sind. Entsprechend sind auch die Kondensatableitung der beiden Heizkreisläufe 9 und 10 getrennt voneinander, wobei dies in der Figur 7 in der geschnittenen Darstellung des Kesselgehäuses 2 deutlich zu erkennen ist. Die Lagerachsennaben 13 und 14 der Lagerachse 6 bestehen hierbei aus doppelwandigen Rohren 15, 16, wie dies in den Detailansichten der Figur 8 und 9 wesentlich besser zu erkennen ist. So ist insbesondere in der Figur 8 deutlich zu erkennen, dass der Heizkreislauf 9 mit dem Innenrohr 15 verbunden ist, wobei der andere Heizkreislauf 10 mit dem umgebenden Außenrohr 16 verbunden ist. Wie insbesondere aus der Figur 5 zu erkennen ist, dringt somit für die beiden Heizkreisläufe 9 und 10 der Heißdampf in die oberen Bereiche der Wandung 9.1 und 9.2 ein, wobei die unteren Rohranschlüsse für den Bodenbereich 10.1 bestimmt sind.

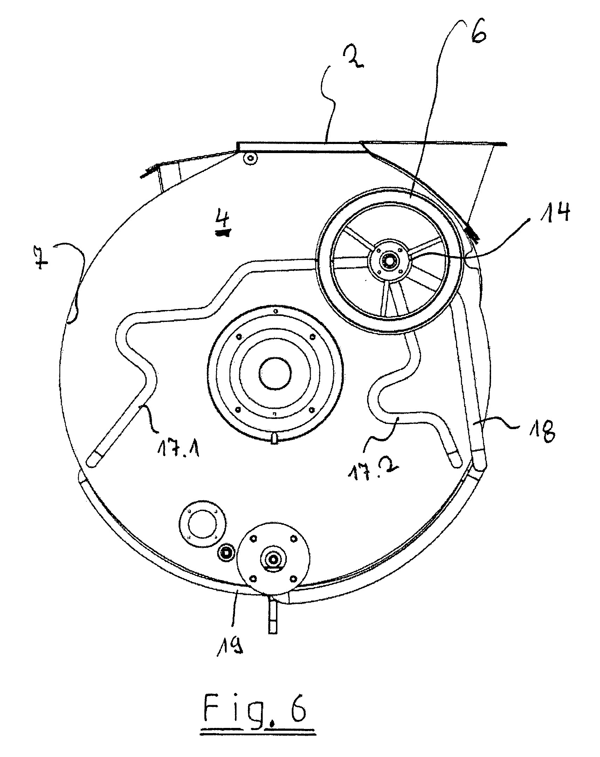

Gemäß der Figur 6, die die gegenüberliegende Seite des Kesselgehäuses 2 darstellt, wird deutlich, dass die Kondensatableitung für die beiden Wandbereiche durch die Rohrleitungen 17.1 und 17.2 erfolgt, wobei die Kondensatableitung für den Bodenbereich über die Leitung 18 erfolgt und wobei das anfallende Kondensat wieder über die Lagerachsennabe 14 geführt wird. Wie insbesondere aus der Figur 4 deutlich zu erkennen ist, nehmen hierbei die Heizkreisläufe 9.1 und 9.2 der Wandbereiche je einen Winkelbereich von 45° ein, wobei der Heizkreislauf 10 des Bodenbereichs 10.1 einen Winkelbereich von 145° einnimmt. Somit wird deutlich und es versteht sich somit von selbst, dass aufgrund dieser Ausbildung der getrennt ansteuerbaren Heizkreisläufe 9 und 10 eine wesentlich bessere Regelung der Temperatur in dem Kessel 1 zum Kochen und Garen von Speisen vorgehalten werden kann, wobei hier wechselseitig entweder vom Boden her oder von den Wänden her die Wärme zugegeben werden kann. Dabei können auch entsprechend wahlweise entweder nur die Wände mit Temperatur beaufschlagt werden oder der Bodenbereich.

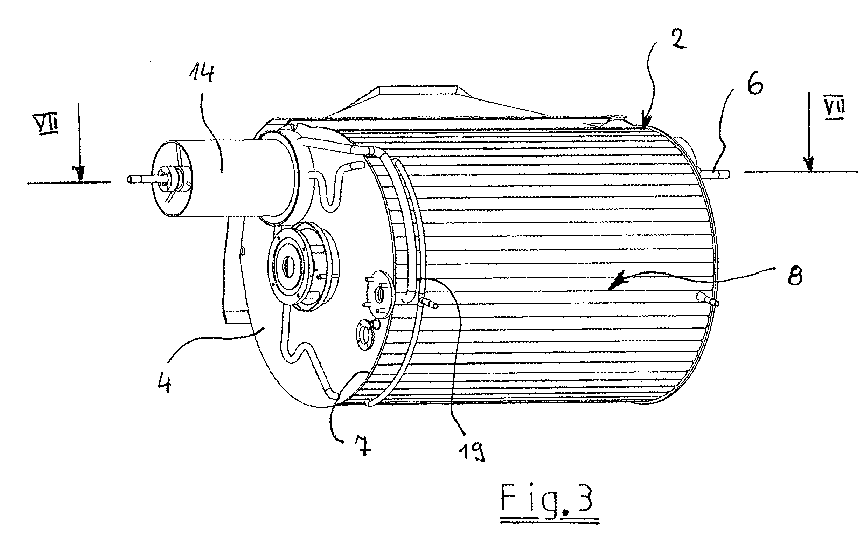

Wie insbesondere aus der Figur 3 noch zu erkennen ist, weisen beide Heizkreisläufe 9 und 10 eine gemeinsame Rohrverbindung 19 auf, die dazu bestimmt ist, dass insbesondere das Heizmedium - sei es hier Öl oder Wasser- aus den die Heizung bildenden Rohren entleert werden kann. Hierzu sind im Bodenbereich sog. Entleerungsstutzen angebracht, über die eine komplette Entleerung des Rohrsystems erfolgen kann.

### Bezugszeichenliste

- 1: Kessel
- 2: Kesselgehäuse
- 3: Stirnseite
- 4: Stirnseite
- 5: Gestell
- 6: Lagerachse
- 7: Außenwand
- 8: Rohre / Heizung
- 9: Heizkreislauf 9.1, 9.2
- 10: Heizkreislauf 10.1
- 11: Druckventil
- 12: Druckventil
- 13: Lagerachsennabe
- 14: Lagerachsennabe
- 15: Rohr innen
- 16: Rohr außen
- 17: Rohrleitung Kondensat 17.1, 17.2
- 18: Rohrleitung Kondensat Bodenbereich
- 19: Rohrverbindung

## Patentansprüche

1. Kessel (1) zum Kochen und/oder Braten von Speisen, umfassend ein Kesselgehäuse (2) in dem ein Rührwerk angeordnet ist, wobei das Kesselgehäuse (2) im wesentlichen zylinderförmig ausgebildet ist und an den Stirnseiten (3, 4) eine in einem Gestell (5) exzentrisch angeordnete Lagerachse (6) zum Kippen des Kesselgehäuses (2) vorgesehen ist, und wobei an der Außenwand (7) des Kesselgehäuses (2) eine aus Rohren (8) bestehende Heizeinrichtung angeordnet ist, deren Einspeisung mit Heizmedium über die Lagerachse (6) zum Kippen erfolgt,
**dadurch gekennzeichnet,**
**dass** die Heizeinrichtung aus unabhängig voneinander regelbaren Heizkreisläufen (9, 10) besteht.

2. Kessel nach Anspruch 1,
**dadurch gekennzeichnet,**
**dass** die Heizeinrichtung aus zwei getrennten Heizkreisläufen (9) und (10) besteht.

3. Kessel nach Anspruch 2,
**dadurch gekennzeichnet,**
**dass** ein Heizkreislauf (9) die gegenüberliegenden Wandbereiche (9.1) und (9.2) des Kessels (1) umfasst, wobei der andere Heizkreislauf (10) den Bodenbereich (10.1) des Kessels (1) umfasst.

4. Kessel nach Anspruch 3,
**dadurch gekennzeichnet,**
**dass** jeder Heizkreislauf (9, 10) über eine gesondert regelbare Dampfeinspeisung verfügt.

5. Kessel nach Anspruch 4,
**dadurch gekennzeichnet,**
**dass** die Dampfeinspeisung sowie die Kondensatableitung der beiden unabhängigen Kreisläufe (9. 10) an einer der Lagerachsennaben (13, 14) zum Kippen erfolgen.

6. Kessel nach Anspruch 5,
**dadurch gekennzeichnet,**
**dass** die Lagerachsennaben (13, 14) aus doppelwandigen Rohren (15) und (16) bestehen.

7. Kessel nach Anspruch 6,
**dadurch gekennzeichnet,**
**dass** ein Heizkreislauf mit dem Innenrohr verbunden ist, wobei der andere Heizkreislauf mit dem umgebenen Außenrohr verbunden ist.

8. Kessel nach Anspruch 7,
**dadurch gekennzeichnet,**
**dass** der Heizkreislauf (9) der Wandbereiche (9.1) und (9.2) mit dem Außenrohr (16) verbunden ist, wobei der Heizkreislauf (10) des Bodenbereichs (10.1) mit dem Innenrohr (15) verbunden ist.

9. Kessel nach Anspruch 8,
**dadurch gekennzeichnet,**
**dass** die Heizkreisläufe (9) der Wandbereiche (9.1) und (9.2) je einen Winkelbereich von ca. 45° einnehmen, wobei der Heizkreislauf (10) des Bodenbereichs (10.1) einen Winkelbereich von ca.145° einnimmt.

10. Kessel nach Anspruch 9,
**dadurch gekennzeichnet,**
**dass** die Heizkreisläufe (9) der Wandbereiche sowie der Heizkreislauf (10) des Bodenbereichs eine gemeinsame Rohrverbindung (19) zur Entleerung aufweisen.
